# EUROPEAN PATENT SPECIFICATION

(11) **EP 2 920 472 B1**
(45) Date of publication and mention of the grant of the patent: **02.08.2017**
(21) Application number: 12888502.7
(22) Date of filing: 14.11.2012
(51) Int. Cl.: F16B 5/02, B64C 27/48, F16B 3/06

(54) **FASTENING MEANS AND ATTACHMENT ASSEMBLY**
BEFESTIGUNGSMITTEL UND BEFESTIGUNGSANORDNUNG
MOYEN DE FIXATION ET ENSEMBLE DE FIXATION

(43) Date of publication of application: 23.09.2015
(73) Proprietor: UMS Skeldar Sweden AB, 589 41 Linköping (SE)
(72) Inventor: STENBOM, Kjell, S-605 97 Norrköping (SE); BERGELIN, Magnus, S-582 12 Linköping (SE)
(74) Representative: Zacco Sweden AB
(86) International application number: PCT/SE2012/051255
(87) International publication number: WO 2014/077744

(56) References cited:
- US-A- 4 048 898
- US-A- 4 048 898
- US-A- 4 961 687
- US-A- 4 961 687
- US-A1- 2006 165 527
- US-A1- 2010 226 715

## Description

### TECHNICAL FIELD

The present invention relates to a fastening means according to the preamble of claim 1. The invention also relates to an attachment assembly.

### TECHNICAL BACKGROUND

Fastening means of the type that mechanically joins and affixes two or more objects together are used in a wide range of applications, for example automobiles and aerial vehicles. Fastening means on the market today, for example core bolts inserted in clamping sleeves, comprise many parts and these parts often do not comprise smooth surfaces. Attachment assemblies comprise two or more objects mechanically joined and affixed together by such fastening means and are used in a wide range of applications, for example automobiles and aerial vehicles. Attachment assemblies on the market today, each for example comprising a rotor hub, rotor blades and fastening means, comprise many parts and these parts often do not comprise smooth surfaces.

Because the parts comprised in the fastening means and in the attachment assemblies do not comprise smooth surfaces a large portion of their surfaces are not in abutment to each other. It is therefore easy for unwanted particles to enter between the parts. This result in that it is difficult and time consuming to keep the fastening means and the attachment assemblies clean from unwanted particles such as dust, grit and contaminants. This results in turn to more expensive maintenance of the fastening means and the attachment assemblies. If the fastening means or the attachment assemblies are arranged in an aerial vehicle, for example a helicopter, it is a disadvantage that it is time consuming to keep the fastening means and the attachment assemblies clean because it leads to that the time for service of the aerial vehicle increases and in turn the aerial vehicles availability decreases. In worst case the fastening means or the attachment assemblies can, if the unwanted particles are not removed from the fastening means or the attachment assemblies, get damaged or broken. If the fastening means or the attachment assemblies are arranged in an aerial vehicle it is a disadvantage if the fastening means or the attachment assemblies get damaged or broken because it leads to decreasing operational safety of the aerial vehicle.

If a rotor blade of an aerial vehicle is changed during maintenance of the aerial vehicle and unwanted particles enter between the fastening means and the bores passing through the rotor blade and wherein the fastening means is inserted, the bores of the rotor blade can get damaged. If the bores of a rotor blade get damaged it can lead to that the rotor blade has to be discarded, which also leads to a more time consuming and more expensive maintenance of the aerial vehicle.

As described earlier, attachment assemblies comprise objects being joined and affixed to each other and often a bolt inserted in bores passing through these objects. It will be impossible to mount the bolt in the bores if the bores through the different objects, for example through a rotor blade and through a rotor hub, are not aligned. One solution could be to increase the diameter of the bores or decrease the core diameter of the bolt to fit some existing expandable fastener or similar, but that would be a disadvantage because it will result in a weaker construction with greater play between the attachment assembly's components. To ensure that the bores are made to the correct specifications and therefore are aligned they need to be co-bored or a master fixture needs to be used. A master fixture is however expensive to manufacture because it is built to fit a particular object. Co-boring of holes leads to a more time consuming and a more expensive production.

A rotor system substantially comprises a rotor hub connected to a rotor drive shaft, and a number of rotor blades fixed to and projecting radially from the rotor hub. Each rotor blade is fitted in one end with a fastening means for connection to a respective arm of the hub. More specifically, the end of the hubs arm is typically C-shaped with opposite parallel end portions connected releasable to one end of the respective rotor blade. Rotor systems are classified according to how the rotor blades are attached and move relative to the rotor hub. There are three basic classifications: rigid, semi rigid or fully articulated rotor systems. In a fully articulated rotor system, each rotor blade is attached to the rotor hub through a series of hinges which allow the blade to move independently of the others. Dampers are usually used in articulated rotor systems to prevent excess back and forth movement. Rigid and semi rigid rotor systems do not permit the rotor blades to move, relative to the rotor hub, back and forth slightly in the horizontal plane because the back-and-forth hunting can develop into serious unwanted vibrations. The terms "dragging," "hunting," and "lead-lag" are also used to describe this movement. The vibrations can result in component wear, for example bending or even breaking of the rotor blades, which in turn can result in an aerial vehicle crash. To decrease the movement back and forth in the horizontal plane the play in the attachment between the rotor blades and the rotor hub is limited by using components with tight tolerances. It is however expensive to manufacture components with tight tolerances because machining and inspection of the components are time consuming and the component rejection rate increases. Even if the components have tight tolerances it is difficult to achieve an attachment between the rotor blades and the rotor hub with limited play because the several tolerances need to cooperate with each other.

Another example of a known fastening means and attachment assembly are disclosed in document US-A1-4961687. US-A1-4961687 discloses a fastening device including sleeves for absorbing forces, and a rotor blade equipped with such a device for fastening to a hub. The device comprises an inner metallic sleeve having a cylindrical central bore and having a frusto-conical outer lateral face which is pressed coaxially and is affixed in the frusto-conical inner bore of an outer sleeve provided with a slot along one of its generatrices, and fitted into a recess delimited in the blade root by a loop formed of bands of rovings of the spar of the blade. The fitting of the two sleeves into one another involves a deformation by radial expansion of the outer sleeve, which adapts itself to the diameter of the recess provided in the composite materials of the blade root. The invention applies to helicopter rotor blades.

The fastening means and attachment assembly that are disclosed in the document US-A1-4961687 has a drawback. The conical sleeves in document US-A1-4961687 surround both the part of the bolt which abuts the rotor hub and the part of the bolt which abuts the rotor blade. This results in that the hole in the rotor blade must be larger or that the diameter of the bolt must be smaller, which leads to a too weaker construction.

As a consequence, in light of the above drawbacks, there is a need of a fastening means and an attachment means which are less time consuming and less expensive to produce, easier to maintain, and an attachment means with a strong construction which avoid lateral vibrations.

### SUMMARY OF THE INVENTION

The subject of the present invention is to eliminate the drawbacks according to prior art.

This subject has been by fulfilled with the fastening means as well as the attachment assembly according to the claims. More specifically the fastening means comprises a bolt having a first bolt portion, a second bolt portion and an intermediate bolt portion arranged between the first bolt portion and the second bolt portion. The first bolt portion is conical and the second bolt portion is threaded. The fastening means further comprises a first bushing with a conical inner surface arranged in circumferential abutment to the first bolt portion and a nut to be threadedly engaged to the second bolt portion.

In another aspect of the invention the first bushing has a cylindrical outer surface. In a further aspect of the invention the fastening means comprises an intermediate bushing arranged in circumferential abutment to the intermediate bolt portion. In yet another aspect of the invention the intermediate bolt portion is cylindrical and the intermediate bushing has a cylindrical inner surface. In another aspect of the invention the intermediate bushing has a cylindrical outer surface. In a further aspect of the invention the fastening means comprises a sleeve arranged in circumferential abutment to the second bolt portion. Further, the second bolt portion can be cylindrical and the sleeve may have a cylindrical inner surface. In another aspect of the invention the fastening means comprises a second bushing arranged in circumferential abutment to the sleeve. In addition the sleeve can have a conical outer surface and the second bushing can have a conical inner surface. In yet another aspect of the invention the second bushing has a cylindrical outer surface. In another aspect of the invention the second bolt portion is provided with a locking element.

The attachment assembly for securing objects to each other comprises at least two bores, arranged through the objects, comprising a first bore portion, a second bore portion and an intermediate bore portion, respectively. The intermediate bore portion is arranged between the first bore portion and the second bore portion. The attachment assembly also comprises at least two fastening means of the kind described above according to the invention, each arranged inside the bores, respectively.

In another aspect of the invention the objects to be secured comprise a rotor hub having a first protruding arm, a second protruding arm and a recess between the arms. A rotor blade is arranged in the recess. The first bore portion is extending through the first protruding arm, the intermediate bore portion is extending through the rotor blade and the second bore portion is extending through the second protruding arm.

The fastening means and the attachment assembly according to the present invention comprises few parts compared to prior art and all these parts have smooth surfaces in abutment to each other. It is therefore difficult for unwanted particles, such as dust, grit and contaminants, to enter between the parts. This results in turn to less time consuming and less expensive maintenance of the fastening means and attachment assembly. If the fastening means or attachment assembly is arranged in an aerial vehicle, for example a helicopter, a less time consuming maintenance is an advantage because it leads to that the time for service of the aerial vehicle decreases and in turn the aerial vehicles availability increases. If the fastening means or attachment assembly is arranged in an aerial vehicle it is also an advantage that the risk of the fastening means or attachment assembly getting damaged or broken decrease because it leads to increasing operational safety of the aerial vehicle.

Because the attachment assembly according to the present invention comprises few parts with smooth surfaces in abutment to each other the play between the parts is limited. This results in decreasing vibrations and in turn decreasing component wear. If the attachment assembly is arranged in an aerial vehicle with a rigid or semi rigid rotor system the movement in the horizontal plane is decreased and in turn the risk of an aerial vehicle crash is decreased.

The fastening means and the attachment assembly according to the present invention comprise a bolt with a conical head and a conical bushing in circumferential abutment to the conical head. Because the head is conical it is self centred when inserted into the conical bushing. Therefore the fastening means and the attachment assembly are easier to assemble, disassemble and reassemble compared to fastening means and attachment assemblies comprising a bolt with a cylindrical head and a cylindrical bushing in circumferential abutment to the cylindrical head. Because the fastening means and the attachment assembly are easier to assemble the parts comprised in the fastening means and the attachment assembly can have less tight tolerances. Therefore the use of a master fixture or co-boring of the bores comprised in the attachment assembly is not needed. This results in a less time consuming and less expensive production.

As described above, the conical sleeve in the attachment assembly only surrounds the head of the bolt. The remainder of the bolt and the bushings in circumferential abutment to the remainder of the bolt are cylindrical. This results in that the bores in which the bushings in circumferential abutment to the remainder of the bolt are inserted do not have to be larger or that the diameter of the bolt does not have to be smaller, which leads to a stronger construction.

Other objectives, embodiments and advantages of the present invention are described in closer detail in the description and in the subsequent patent claims.

### BRIEF DESCRIPTION OF THE DRAWINGS

In the following prior art and the invention will be described with reference to embodiments of prior art, embodiments of the present invention and the accompanying drawings, in which:
- Fig. 1A: shows a perspective view of two fastening means, wherein one fastening means is exploded, according to prior art,
- Fig. 1B: shows a perspective view of an attachment assembly, wherein one fastening means is exploded, according to prior art,
- Fig. 2: shows a cross sectional view of a fastening means according to the present invention, and
- Fig. 3: shows a cross sectional view of an attachment assembly according to the present invention.

### DETAILED DESCRIPTION OF PRIOR ART AND THE INVENTION

In the following a number of embodiments of prior art and the invention are shown and described. The same reference numbers have been used for the same or similar features throughout the description in the embodiments disclosed below.

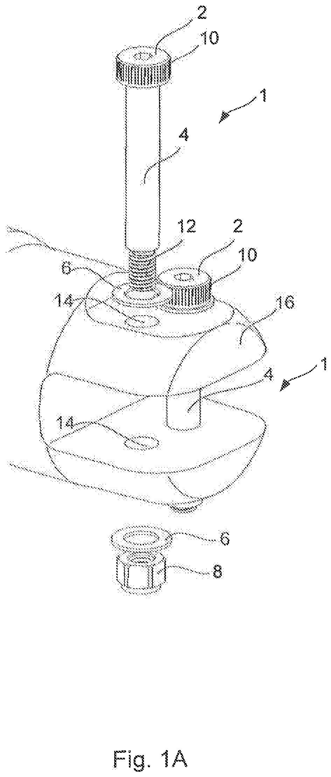

Fig. 1A shows a perspective view of two fastening means 1, wherein one fastening means 1 is exploded, according to prior art. The respective fastening means 1 comprise a cylindrical bolt 2, for example a fitting bolt, a cylindrical bushing 4, arranged in circumferential abutment to the cylindrical bolt 2, two washers 6, arranged in circumferential abutment to the cylindrical bushing 4 and a nut 8.The respective cylindrical bolt 2 comprise a head 10 and a threaded portion 12, with threads along the threaded portions 12 length, arranged opposed to the head 10. The respective nut 8, having internal threads matching the threads of the threaded portion 12, is arranged on the threaded portion 12 to fasten the cylindrical bolt 2, the cylindrical bushing 4 and the washers 6 together. The respective fastening means 1 is arranged inside two bores 14 passing through a first object 16, for example a rotor hub. By tightening the nut 8 the fastening means 1 can be assembled disassembled and reassembled.

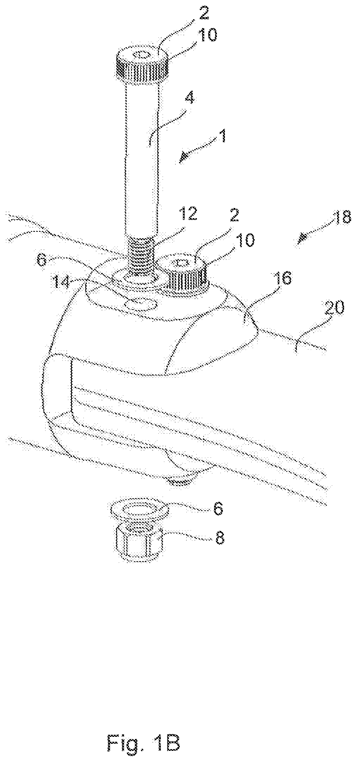

Fig. 1B shows a perspective view of an attachment assembly 18, wherein one fastening means 1 is exploded, according to prior art. The respective fastening means 1 comprise the same features as shown in fig. 1A and that are described above. These features have the same reference numbers as in fig. 1A. The respective fastening means 1 is also arranged inside two bores 14 passing through a second object 20, for example a rotor blade. The respective nut 8 fastens the cylindrical bolt 2, the cylindrical bushing 4, the washers 6, the first object 16 and the second object 20 together. By tightening the nut 8 the attachment assembly 18 can be readily assembled, disassembled and reassembled.

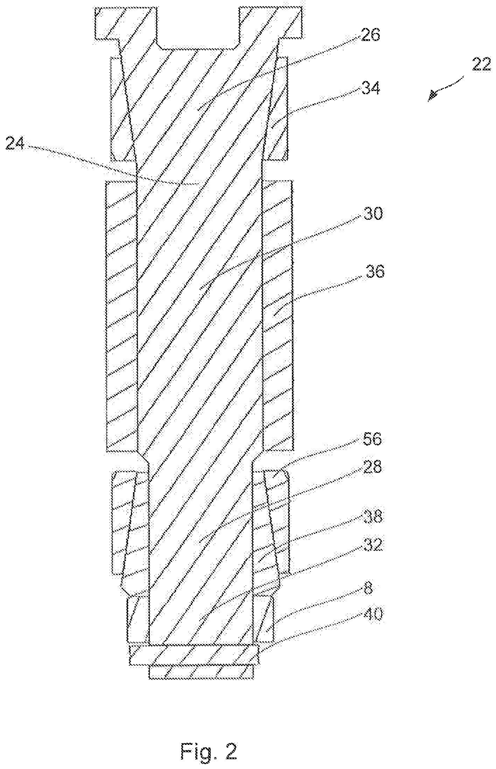

Fig. 2 shows a cross sectional view of a fastening means 22 according to the present invention. The fastening means comprises a bolt 24. The bolt 24 comprises a first bolt portion 26, a second bolt portion 28 and an intermediate bolt portion 30. The first bolt portion 26, also called head, is arranged opposed to the second bolt portion 28. The intermediate bolt portion 30 is arranged between the first bolt portion 26 and the second bolt portion 28. The first bolt portion 26 is constituted by a head in the form of a frustum of a cone with a top and a base, wherein the top is arranged opposed to the base and wherein the base is arranged in the end of the bolt 24. The second bolt portion 28 and the intermediate portion 30 are cylindrical. The second bolt portion 28 comprises a threaded portion 32, with threads along the threaded portions 32 length, arranged in the end of the bolt 24.

A first bushing 34 is arranged in circumferential abutment to the first bolt portion 26. The first bushing 34 comprises a cylindrical outer surface and a conical inner surface, wherein the conical inner surface is in the form of a frustum of a cone with a top and a base, wherein the top is arranged opposed to the base and the base is arranged in circumferential abutment to the base of the first bolt portion 26. An intermediate bushing 36, comprising a cylindrical inner and outer surface, is arranged in circumferential abutment to the intermediate bolt portion 30. A sleeve 38 is arranged in circumferential abutment to the second bolt portion 28 and inside a second bushing 56. The sleeve 38 comprises a cylindrical inner surface and a conical outer surface, wherein the conical outer surface is in the form of a frustum of a cone with a top and a base, wherein the top is arranged opposed to the base and the base is arranged in circumferential abutment to the end of the bolt 24. The second bushing 56 comprises a cylindrical outer surface and a conical inner surface, wherein the conical inner surface is in the form of a frustum of a cone with a top and a base, wherein the top is arranged opposed to the base and the base is arranged in circumferential abutment to the base of the sleeves 38 outer surface.

A nut 8, having internal threads matching the threads of the threaded portion 32, is arranged on the threaded portion 32 to fasten the bolt 24, the first bushing 34, the intermediate bushing 36 and the sleeve 38 together. By tightening the nut 8 the fastening means 22 can readily be assembled, disassembled and reassembled. The nut 8 can be constituted by a wide range of different types of nuts, for example a castle nut or a locking nut. A locking element 40 is arranged through the second threaded bolt portion 32, at the end of the bolt 24. It is advantageous that the fastening means 22 comprise the locking element 40 when the fastening means 22 is used in applications where vibration or rotation can make the nut 8 disappear. It is possible to use various locking elements 40, for example a cotter pin.

The bolt 24, the first bushing 34, the intermediate bushing 36, the sleeve 38, the locking element 40 and the nut 8 can be made of many different types of materials and they can have different lengths, thicknesses and finishes. The fastening means 22 according to the present invention can be used in a wide range of applications, for example automobiles and aerial vehicles.

The parts comprised in the fastening means 22 all have smooth surfaces in abutment to each other. The first bushing 34 is in substantial abutment with the first bolt portion 26 along the whole abutment surface between the first bushing 34 and the first bolt portion 26. The intermediate bushing 36 is in substantial abutment with the intermediate bolt portion 30 along the whole abutment surface between the intermediate bushing 36 and the intermediate bolt portion 30. The sleeve 38 is in substantial abutment with the second bolt portion 28 along the whole abutment surface between the sleeve 38 and the second bolt portion 28. The second bushing 56 is in substantial abutment with the sleeve 38 along the whole abutment surface between the second bushing 56 and the sleeve 38.

It is therefore difficult for unwanted particles to enter between the parts. This results in that the time for keeping the fastening means 22 clean from unwanted particles, such as dust, grit and contaminants, decreases. In turn it results to less expensive and less time consuming maintenance of the fastening means 22. If the fastening means 22 are arranged in an aerial vehicle, for example a helicopter, it is an advantage with less time consuming maintenance of the fastening means 22 because it leads to that the time for service of the aerial vehicle decreases and in turn the aerial vehicles availability increases. If the fastening means 22 are arranged in an aerial vehicle it is an advantage that the fastening means 22 do not get damaged or broken due to unwanted particles entering between the different parts because it leads to increasing operational safety of the aerial vehicle.

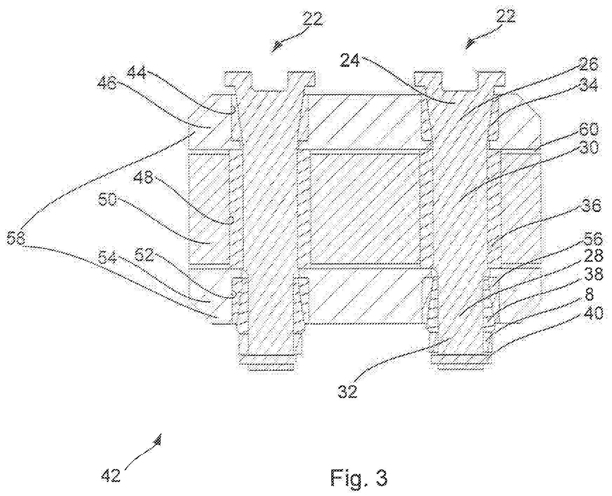

Fig. 3 shows a cross sectional view of an attachment assembly 42 according to the present invention. The attachment assembly 42, such as for example a rotor blade and hub attachment assembly, comprises a fastening means 22, a first object 46, an intermediate object 50 and a second object 54. The respective fastening means 1 comprise the same features as shown in fig. 2 and that are described above. These features have the same reference numbers as in fig. 2. A rotor system substantially comprises a rotor hub 58 connected angularly to a rotor drive shaft, and a number of rotor blades 50 fixed to and projecting radially from the rotor hub 58. Each rotor blade 50 is fitted in one end with a fastening means 22 for connection to a respective arm of the rotor hub 58. More specifically, the rotor hub 58 is typically C-shaped with a first protruding arm 46 and a second protruding arm 54, a recess 60 between the arms 46 and 54 and a rotor blade 50 arranged in the recess 60. The first protruding arm 46 and the second protruding arm 54 are parallel to each other. The rotor hub 58 is joined and affixed to at least two rotor blades 50, preferably in a rigid or semi rigid rotor system.

A first bushing 34 is arranged in circumferential abutment to the first bolt portion 26 and inside a first bore 44 passing through a first object 46, for example a rotor hub 58. The first bushing 34 can be arranged inside the first bore 44 by pressing the first bushing 34 into the first bore 44. The first bushing 34 comprises a cylindrical outer surface and a conical inner surface, wherein the conical inner surface is in the form of a frustum of a cone with a top and a base, wherein the top is arranged opposed to the base and the base is arranged in circumferential abutment to the base of the first bolt portion 26. An intermediate bushing 36, comprising a cylindrical inner and outer surface, is arranged in circumferential abutment to the intermediate bolt portion 30 and inside an intermediate bore 48 passing through an intermediate object 50, for example a rotor blade 50. An advantageous positional tolerance for the intermediate bushing 36 and the bolt 24 can be H5 or G5. The intermediate bushing 36 can be integrated to the inside of the intermediate bore 48, by for example moulding. A sleeve 38 is arranged in circumferential abutment to the second bolt portion 28 and inside a second bushing 56. The sleeve 38 comprises a cylindrical inner surface and a conical outer surface, wherein the conical outer surface is in the form of a frustum of a cone with a top and a base, wherein the top is arranged opposed to the base and the base is arranged in circumferential abutment to the end of the bolt 24. The second bushing 56 comprises a cylindrical outer surface and a conical inner surface, wherein the conical inner surface is in the form of a frustum of a cone with a top and a base, wherein the top is arranged opposed to the base and the base is arranged in circumferential abutment to the base of the sleeves 38 outer surface. The second bushing 56 is arranged inside a second bore 52 passing through a second object 54.

The first bore 44, the intermediate bore 48 and the second bore 52 does not need to be totally concentric depending on the outcome of the tolerances. The pitch between the first bore 44 and the intermediate bore 48, the pitch between the intermediate bore 48 and the second bore 52 and the pitch between the first bore 44 and the second bore 52 can be for example 0.1 mm. Because the first bore 44, the intermediate bore 48 and the second bore 52 does not need to be totally concentric they do not need to be co-bored and a master fixture is not needed. This leads to a less expensive and less time consuming production of the attachment assembly 42. The first bore 44, the intermediate bore 48 and the second bore 52 can suitably have a diameter of about 6-50 mm.

A nut 8, having internal threads matching the threads of the threaded portion 32, is arranged on the threaded portion 32 to fasten the bolt 24, the first bushing 34, the intermediate bushing 36, the sleeve 38, the second bushing 56, the first object 46, the intermediate object 50 and the second object 54 together. Because the first bolt portion 26 has a conical outer surface it is self centered when it is inserted into the first bushing 34 with a conical inner surface. By tightening the nut 8 the fastening means 22 can therefore readily be assembled, disassembled and reassembled. The nut 8 can be constituted by a wide range of different types of nuts, for example a castle nut or a locking nut.
A locking element 40 is arranged through respective threaded bolt portion 32, at the end of the bolt 24. The locking element 40 is not required, but it is advantageous that the attachment assembly 42 comprise the locking element 40 when the attachment assembly 42 is used in applications where vibration or rotation can make the nut 8 disappear from the threaded bolt portion 32. It is possible to use various locking elements, for example a cotter pin.

The bolt 24, the first bushing 34, the intermediate bushing 36, the sleeve 38, the second bushing 56, the locking element 40 and the nut 8 can be made of many different types of materials and they can have different lengths, thicknesses and finishes. The attachment assembly 42 is not limited to comprise three objects (in this embodiment a first object 46, an intermediate object 50 and a second object 54); it can comprise a large plurality of objects.

As described above, all the parts comprised in the fastening means 22 have smooth surfaces in abutment to each other. Also the first bushing 34 is in substantial abutment with the first bore portion 44 along the whole abutment surface between the first bushing 34 and the first bore portion 44, the intermediate bushing 36 is in substantial abutment with the intermediate bore portion 48 along the whole abutment surface between the intermediate bushing 36 and the intermediate bore portion 48 and the second bushing 56 is in substantial abutment with the second bore portion 52 along the whole abutment surface between the second bushing 56 and the second bore portion 52. The attachment assembly 42 therefore has the same advantages as the fastening means 22 described above. Yet another advantage is that the discard of parts comprised in the attachment assembly 42, for example rotor blades 50, decreases.

The invention is not limited by what has been particularly shown or described, except as indicated by the appended claims.

## Claims

1. A fastening means (22) for aerial vehicles, comprising a bolt (24) having a first bolt portion (26), a second bolt portion (28) and an intermediate bolt portion (30) arranged between the first bolt portion (26) and the second bolt portion (28), **characterised in that** the first bolt portion (26) is conical and the second bolt portion (28) is threaded, the fastening means further comprising a first bushing (34) arranged in circumferential abutment to the first bolt portion (26), and a nut (8) to be threadedly engaged to the second bolt portion (28), wherein the first bushing (34) has a conical inner surface, and wherein the fastening means (22) further comprises an intermediate bushing (36) arranged in circumferential abutment to the intermediate bolt portion (30), wherein the intermediate bolt portion (30) is cylindrical and wherein the intermediate bushing (36) has a cylindrical inner surface.

2. The fastening means according to claim 1, wherein the first bushing (34) has a cylindrical outer surface.

3. The fastening means according to claim 1 or 2, wherein the intermediate bushing (36) has a cylindrical outer surface.

4. The fastening means according to any of the previous claims, comprising a sleeve (38) arranged in circumferential abutment to the second bolt portion (28).

5. The fastening means according to claim 4, wherein the second bolt portion (28) is cylindrical and the sleeve (38) has a cylindrical inner surface.

6. The fastening means according to claim 4 or 5, comprising a second bushing (56) arranged in circumferential abutment to the sleeve (38).

7. The fastening means according to claim 6, wherein the sleeve (38) has a conical outer surface and the second bushing (56) has a conical inner surface.

8. The fastening means according to claim 6 or 7, wherein the second bushing (56) has a cylindrical outer surface.

9. The fastening means according to any of the previous claims, wherein the second bolt portion (28) is provided with a locking element (40) through a threaded portion (32) of the second bolt portion (28), at the end of the bolt (24), to prevent the nut (8) from disappearing.

10. An attachment assembly (42) for securing objects (46, 50, 54) to each other, comprising at least two bores, arranged through the objects (46, 50, 54), each bore comprising a first bore portion (44), a second bore portion (52) and an intermediate bore portion (48), respectively, the intermediate bore portion (48) is arranged between the first bore portion (44) and the second bore portion (52), and at least two fastening means (22) according to one or more of claims 1-9, each of the fastening means (22) being arranged inside the bores (44, 48, 52), respectively.

11. The attachment assembly (42) according to claim 10, wherein the objects (46, 50, 54) to be secured comprises a rotor hub (58) having a first protruding arm (46) and a second protruding arm (54), a recess (60) between the arms (46, 54) and a rotor blade (50) arranged in the recess (60), the first bore portion (44) is extending through the first protruding arm (46), the intermediate bore portion (48) is extending through the rotor blade (50) and the second bore portion (52) is extending through the second protruding arm (54).

## Patentansprüche

1. Befestigungsmittel (22) für Luftfahrzeuge, umfassend einen Bolzen (24) mit einem ersten Bolzenteil (26), einem zweiten Bolzenteil (28) und einem dazwischenliegenden Bolzenteil (30), der zwischen dem ersten Bolzenteil (26) und dem zweiten Bolzenteil (28) angeordnet ist,
**dadurch gekennzeichnet, dass** der erste Bolzenteil (26) kegelförmig ist und der zweite Bolzenteil (28) mit Gewinde versehen ist, wobei das Befestigungsmittel des Weiteren eine erste Führungshülse (34), die in Umfangsanlage zu dem ersten Bolzenteil (26) angeordnet ist, und eine mit dem zweiten Bolzenteil (28) schraubbar in Eingriff zu bringende Mutter (8) aufweist,
wobei die erste Führungshülse (34) eine konische Innenfläche besitzt, und wobei das Befestigungsmittel (22) des Weiteren eine Zwischenhülse (36) aufweist, die in Umfangsanlage zu dem dazwischenliegenden Bolzenteil (30) angeordnet ist, wobei der dazwischenliegende Bolzenteil (30) zylindrisch ist und die Zwischenhülse (36) eine zylindrische Innenfläche besitzt.

2. Befestigungsmittel nach Anspruch 1, wobei die erste Führungshülse (34) eine zylindrische Außenfläche aufweist.

3. Befestigungsmittel nach Anspruch 1 oder 2, wobei die Zwischenhülse (36) eine zylindrische Außenfläche aufweist.

4. Befestigungsmittel nach einem der vorhergehenden Ansprüche, umfassend eine Muffe (38), die in Umfangsanlage zu dem zweiten Bolzenteil (28) angeordnet ist.

5. Befestigungsmittel nach Anspruch 4, wobei der zweite Bolzenteil (28) zylindrisch ist und die Muffe (38) eine zylindrische Innenfläche aufweist.

6. Befestigungsmittel nach Anspruch 4 oder 5, umfassend eine zweite Führungshülse (56), die in Umfangsanlage zu der Muffe (38) angeordnet ist.

7. Befestigungsmittel nach Anspruch 6, wobei die Muffe (38) eine kegelförmige Außenfläche und die zweite Führungshülse (56) eine konische Innenfläche aufweist.

8. Befestigungsmittel nach Anspruch 6 oder 7, wobei die zweite Führungshülse (56) eine zylindrische Außenfläche aufweist.

9. Befestigungsmittel nach einem der vorhergehenden Ansprüche, wobei der zweite Bolzenteil (28) mit einem Sperrelement (40) durch einen Gewindeabschnitt (32) des zweiten Bolzenteils (28), am Ende des Bolzens (24), versehen ist, um zu verhindern, dass die Mutter (8) verloren geht.

10. Befestigungsgruppe (42) zur Sicherung von Objekten (46, 50, 54) zueinander, umfassend mindestens zwei Bohrungen, die durch die Objekte (46, 50, 54) angeordnet sind, wobei jede Bohrung jeweils einen ersten Bohrungsabschnitt (44), einen zweiten Bohrungsabschnitt (52) und einen dazwischenliegenden Bohrungsabschnitt (48) umfasst, der dazwischenliegende Bohrungsabschnitt (48) zwischen dem ersten Bohrungsabschnitt (44) und dem zweiten Bohrungsabschnitt (52) angeordnet ist, und mindestens zwei Befestigungsmittel (22) nach einem oder mehreren der Ansprüche 1 bis 9, wobei jedes der Befestigungsmittel (22) jeweils im Innern der Bohrungen (44, 48, 52) angeordnet ist.

11. Befestigungsgruppe (42) nach Anspruch 10, wobei die zu sichernden Objekte (46, 50, 54) eine Rotornabe (58) mit einem ersten hervorstehenden Arm (46) und einem zweiten hervorstehenden Arm (54), einer Aussparung (60) zwischen den Armen (46, 54) und ein Rotorblatt (50) aufweisen, das in der Aussparung (60) angeordnet ist, wobei sich der erste Bohrungsabschnitt (44) durch den ersten hervorstehenden Arm (46) erstreckt, der dazwischenliegende Bohrungsabschnitt (48) sich durch das Rotorblatt (50) erstreckt und der zweite Bohrungsabschnitt (52) sich durch den zweiten hervorstehenden Arm (54) erstreckt.

## Revendications

1. Moyen de fixation (22) pour des véhicules aériens, comprenant un boulon (24) présentant une première partie de boulon (26), une seconde partie de boulon (28) et une partie de boulon intermédiaire (30) agencée entre la première partie de boulon (26) et la seconde partie de boulon (28), **caractérisé en ce que** la première partie de boulon (26) est conique et la seconde partie de boulon (28) est filetée, le moyen de fixation comprenant en outre une première bague (34) agencée en butée circonférentielle contre la première partie de boulon (26), et un écrou (8) à engager par filetage dans la seconde partie de boulon (28),
dans lequel la première bague (34) présente une surface intérieure conique et dans lequel le moyen de fixation (22) comprend en outre une bague intermédiaire (36) agencée en butée circonférentielle contre la partie de boulon intermédiaire (30), dans lequel la partie de boulon intermédiaire (30) est cylindrique et dans lequel la bague intermédiaire (36) présente une surface intérieure cylindrique.

2. Moyen de fixation selon la revendication 1, dans lequel la première bague (34) présente une surface extérieure cylindrique.

3. Moyen de fixation selon la revendication 1 ou 2, dans lequel la bague intermédiaire (36) présente une surface extérieure cylindrique.

4. Moyen de fixation selon l'une quelconque des revendications précédentes, comprenant un manchon (38) agencé en butée circonférentielle contre la seconde partie de boulon (28).

5. Moyen de fixation selon la revendication 4, dans lequel la seconde partie de boulon (28) est cylindrique et le manchon (38) présente une surface intérieure cylindrique.

6. Moyen de fixation selon la revendication 4 ou 5, comprenant une seconde bague (56) agencée en butée circonférentielle contre le manchon (38).

7. Moyen de fixation selon la revendication 6, dans lequel le manchon (38) présente une surface extérieure conique et la seconde bague (56) présente une surface intérieure conique.

8. Moyen de fixation selon la revendication 6 ou 7, dans lequel la seconde bague (56) présente une surface extérieure cylindrique.

9. Moyen de fixation selon l'une quelconque des revendications précédentes, dans lequel la seconde partie de boulon (28) est dotée d'un élément de verrouillage (40) au travers d'une partie filetée (32) de la seconde partie de boulon (28) sur l'extrémité du boulon (24) pour empêcher l'écrou (8) de disparaître.

10. Ensemble d'attache (42) pour fixer des objets (46, 50, 54) les uns aux autres, comprenant au moins deux trous, agencés au travers des objets (46, 50, 54), chaque trou comprenant respectivement une première partie de trou (44), une seconde partie de trou (52) et une partie de trou intermédiaire (48), la partie de trou intermédiaire (48) est agencée entre la première partie de trou (44) et la seconde partie de trou (52), et au moins deux moyens de fixation (22) selon l'une ou plusieurs des revendications 1 à 9, chacun des moyens de fixation (22) étant respectivement agencé dans les trous (44, 48, 52).

11. Ensemble d'attache (42) selon la revendication 10, dans lequel les objets (46, 50, 54) à fixer comprennent un moyeu de rotor (58) présentant un premier bras en saillie (46) et un second bras en saillie (54), un évidement (60) entre les bras (46, 54) et une pale de rotor (50) agencée dans l'évidement (60), la première partie de trou (44) s'étend au travers du premier bras en saillie (46), la partie de trou intermédiaire (48) s'étend au travers de la pale de rotor (50) et la seconde partie de trou (52) s'étend au travers du second bras en saillie (54).
